# EUROPÄISCHE PATENTSCHRIFT

(11) **EP 1 690 122 B1**
(45) Veröffentlichungstag und Bekanntmachung des Hinweises auf die Patenterteilung: **05.11.2008**
(21) Anmeldenummer: 04766837.1
(22) Anmeldetag: 22.09.2004
(51) Int. Cl.: G02B 21/06, G02B 21/00, G02B 21/08

(54) **BELEUCHTUNGSMODUL ZUR EVANESZENTEN BELEUCHTUNG UND MIKROSKOP**
ILLUMINATION MODULE FOR EVANESCENT ILLUMINATION AND MICROSCOPE
MODULE D'ECLAIRAGE POUR ECLAIRAGE EVANESCENT, ET MICROSCOPE CORRESPONDANT

(30) Priorität: 25.09.2003 DE 10344410; 10.09.2004 DE 102004044309
(43) Veröffentlichungstag der Anmeldung: 16.08.2006
(73) Patentinhaber: Leica Microsystems CMS GmbH, 35578 Wetzlar (DE); Leica Microsystems Heidelberg GmbH, 68165 Mannheim (DE)
(72) Erfinder: HECKER, Andreas, 35614 Asslar (DE); KNEBEL, Werner, 76709 Kronau (DE); MÖLLMANN, Kyra, 67705 Trippstadt (DE); ULRICH, Heinrich, 69121 Heidelberg (DE)
(74) Vertreter: Naumann, Ulrich
(86) Internationale Anmeldenummer: PCT/EP2004/052268
(87) Internationale Veröffentlichungsnummer: WO 2005/031432

(56) Entgegenhaltungen:
- EP-A- 1 054 282
- WO-A-98/08219
- WO-A-03/023483
- WO-A-03/087914
- US-A- 5 953 115
- US-A1- 2003 058 530

## Beschreibung

Die Erfindung betrifft ein Mikroskop mit einer Lichtquelle zur Erzeugung eines Beleuchtungslichtstrahlenbündels, mit einem Objektiv, in welches das Beleuchtungslichtstrahlenbündel derart eingekoppelt wird, dass eine evaneszente Beleuchtung einer Probe realisiert ist, wobei das Objektiv eine Objektivpupille aufweist und das Beleuchtungslichtstrahlenbündel zur evaneszenten Beleuchtung der Probe im Bereich der Objektivpupille einen Fokus aufweist, sowie mit einem Einstellmittel, mit dem die Polarisation des Beleuchtungslichtstrahlenbündels veränderbar ist.

Die Erfindung betrifft außerdem ein Beleuchtungsmodul mit einer Lichtquelle zur Erzeugung eines Beleuchtungslichtstrahlenbündels, wobei das Beleuchtungsmodul derart an ein Mikroskop ankoppelbar ist, dass das Beleuchtungslichtstrahlenbündel in der Ebene der Objektivpupille des Mikroskops einen Fokus aufweist und eine evaneszente Beleuchtung einer Probe realisiert ist, sowie mit einem Einstellmittel, mit dem die Polarisation des Beleuchtungslichtstrahlenbündels veränderbar ist.

Aus US 2002/0097489 A1 ist ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt.

Die z-Auflösung von TIRF-Mikroskopen ist aufgrund des nur ca. 100 nm in die Probe ragenden evaneszenten Feldes außerordentlich gut.

Aus DE 101 08 796 A1 ist ein hochaperturiges Objektiv, insbesondere für TIRF-Anwendungen bekannt. Das Objektiv besteht aus einer ersten Linse mit einer positiven Brechkraft, einer zweiten Linse mit negativer Brechkraft, wobei das Brennweitenverhältnis zwischen den beiden Linsen im Bereich von - 0,4 und - 0,1 liegt und die Gesamtbrechkraft größer Null ist. Ferner beinhaltet das Objektiv zwei positive Linsen, deren Verhältnisdurchmesser zur Brennweite größer 0,3 und kleiner 0,6 ist. Ferner beinhaltet das Objektiv eine Negativlinse und einer Sammellinse, wobei die Negativlinse der Frontgruppe zugewandt ist und das Brennweitenverhältnis der Negativlinse und der Sammellinse zwischen - 0,5 und - 2 liegt.

Aus DE 102 17 098 A1 ist eine Auflichtbeleuchtungsanordnung für die TIRF-Mikroskopie bekannt. Die Auflichtbeleuchtungsanordnung beinhaltet eine Beleuchtungsquelle, die im Betrieb ein polarisiertes Beleuchtungsstrahlenbündel abgibt, das unter einem Winkel zur optischen Achse propagiert und eine Umlenkeinrichtung, die das Beleuchtungsstrahlenbündel umlenkt und parallel zur optischen Achse in das Objektiv einkoppelt. Es ist bei dieser Auflichtbeleuchtungsanordnung vorgesehen, dass das von der Beleuchtungsquelle abgegebene Beleuchtungsstrahlenbündel s- und p-Polarisationsrichtungen mit einer Phasendifferenz aufweist und die Umlenkeinrichtung das Beleuchtungsstrahlenbündel x-mal reflektiert, wobei x = (n x 180° - d) /60°.

Aus DE 101 43 481 A1 ist ein Mikroskop zur TIRM (Total Internal Reflection Microscopy) bekannt. Das Mikroskop weist ein Mikroskopgehäuse und ein Objektiv auf. Das von einer Beleuchtungseinrichtung ausgehende Beleuchtungslicht kann über einen in das Mikroskopgehäuse einschiebbaren Adapter eingekoppelt werden.

Aus US 2004/0001253 A1 ist ein Mikroskop mit einem optischen Beleuchtungssystem, das ein einfaches Umschalten zwischen evaneszenter Beleuchtung und Reflektionsbeleuchtung ermöglicht. Das Beleuchtungssystem beinhaltet eine Laserlichtquelle, deren Licht in eine optische Faser eingekoppelt wird. Ferner ist eine Auskoppeloptik vorgesehen, die das aus der Faser austretende Licht in einen hinteren Brennpunkt des Mikroskopobjektivs fokussiert. Die optische Faser ist in einer Ebene senkrecht zur optischen Achse des Mikroskopobjektivs verschiebbar.

Aus DE 102 29 935 A1 ist eine Einrichtung zur Einkopplung von Licht in einem Mikroskop bekannt. Dabei wird in der Leuchtfeldblendenebene durch eine als Schieber ausgeführte Lichtleitfaser-Einkopplung Laserlicht auf das Präparat gerichtet. Die Erfindung ist insbesondere für das TIRF-Verfahren geeignet.

In der Rastermikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Die WO 98/08219 offenbart ein Mikroskop mit einem Beleuchtungslichtstrahl zur evaneszenten Probenbeleuchtung, wobei ein Einstellmittel vorgesehen, mit dem die Polarisation des Beleuchtungslichtstrahls veränderbar ist. Das Mikroskop umfasst zwei Detektionszweige, die jeweils eine Objektivlinse mit einem nachgeordneten Photodetektor sowie einen vorgeschalteten Phasenanalysator aufweisen. Die von den Photodetektoren erzeugten Videosignale werden auf internen Chips digitalisiert, und die Bildsignale werden von einem Computer verarbeitet. In Abhängigkeit von dem Kontrast der Bildsignale wird ein Phasenänderungssignal generiert, mit dem ein Phasenregler angesteuert wird.

Aus der EP 1 054 282 A2 ist ein Transducer zur Erzeugung optischer Kontraste bei der Nahfelddarstellung von Topografien eines Objekts bekannt. Der Transducer ist in der Fokusebene einer zugeordneten Abbildungsoptik angeordnet. Das zur Objektbeleuchtung verwendete Beleuchtungslicht durchläuft zur Verbesserung des Kontrastes zwischen Beleuchtungs- und Beobachtungsstrahl einen Polarisator.

Die WO 03/023483 A2 zeigt ein TIRF-Mikroskop mit evaneszenter Probenleuchtung, wobei unterschiedliche Beleuchtungseinrichtungen vorgesehen sind, über die das Beleuchtungslicht in das Mikroskopobjektiv einkoppelbar ist. Die Beleuchtungseinrichtungen umfassen optische Bauteile zur Strahlablenkung, die mechanisch verschiebbar ausgeführt sind und dementsprechend eine Veränderung des Winkels erlauben, unter dem die Totalreflexion stattfindet.

Aus der US 2003/0058530 A1 ist ein Mikroskop bekannt, das zwischen einem Betrieb als TIRF-Mikroskop oder als Fluoreszenzmikroskop umschaltbar ist. Zur Auswahl einer für den jeweiligen Betriebsmodus geeigneten Wellenlänge umfasst das Mikroskop einen AOTF. Eine Einstellung der Eindringtiefe erfolgt über eine Verschiebung der Beleuchtungslichtquelle, wodurch der Abstand des Ortes der Lichteinkopplung in das Objektiv von der optischen Achse und damit der TIRF-Winkel beeinflussbar sind.

Die US 5,953,115 offenbart eine TIRF-Anordnung zur Abbildung der Oberflächentopografie von Wafern, wobei im Beleuchtungsstrahlengang der Anordnung ein Wellenlängenfilter, ein Polarisator sowie ein zusätzliches weiteres optisches Element zur Einstellung des Einfallswinkels des Beleuchtungslichts angeordnet sind.

Es ist die Aufgabe der vorliegenden Erfindung ein Mikroskop sowie ein Beleuchtungsmodul für ein Mikroskop derart anzugeben, dass mit einfachen Mitteln eine gezielte und reproduzierbare Beeinflussung der Eindringtiefe des evaneszenten Feldes in die Probe ermöglicht ist.

Diese Aufgabe wird durch ein Mikroskop gelöst, das dadurch gekennzeichnet ist, dass im Strahlengang des Beleuchtungslichtstrahlenbündels ein Strahlteiler zur Auskopplung eines Messstrahls aus dem Beleuchtungslichtstrahlenbündels angeordnet ist und dass ein Regelkreis zur Regelung der Eindringtiefe der evaneszenten Beleuchtung in die Probe realisiert ist, wobei als Messglied des Regelkreises ein im Strahlengang des Messstrahls angeordneter Polarisationsanalysator zur Bestimmung der Polarisation des Messstrahls und als Stellglied des Regelkreises das Einstellmittel vorgesehen sind.

Des Weiteren ist die Aufgabe durch ein Beleuchtungsmodul gelöst, das dadurch gekennzeichnet ist, dass im Strahlengang des Beleuchtungslichtstrahlenbündels ein Strahlteiler zur Auskopplung eines Messstrahls aus dem Beleuchtungslichtstrahlenbündels angeordnet ist und dass ein Regelkreis zur Regelung der Eindringtiefe der evaneszenten Beleuchtung in die Probe realisiert ist, wobei als Messglied des Regelkreises ein im Strahlengang des Messstrahls angeordneter Polarisationsanalysator zur Bestimmung der Polarisation des Messstrahls und als Stellglied des Regelkreises das Einstellmittel vorgesehen sind.

Erfindungsgemäß wurde erkannt, dass die Eindringtiefe (und die Lichtleistung) eines evaneszenten Beleuchtungsfeldes in eine Probe von der Polarisation des Beleuchtungslichtes, das auf die Grenzfläche Deckglas-Probe bzw. Objektträger-Probe trifft, abhängt.

Durch das erfindungsgemäße Mikroskop bzw. durch das erfindungsgemäße Beleuchtungsmodul ist es außerdem vorteilhaft ermöglicht, die Orientierung von Probenobjekten (beispielsweise Moleküle, Zellbausteine, ...) aufzulösen und damit die Isotropie des Raumes zu brechen.

Erfindungsgemäß wurde zusätzlich erkannt, dass die Eindringtiefe eines evaneszenten Beleuchtungsfeldes in eine Probe neben der Polarisation auch von dem Winkel, unter dem die Totalreflexion an der Deckglasgrenzfläche bzw. an der Objektträgergrenzfläche stattfindet, abhängt. Dieser Winkel ist direkt korreliert mit dem Winkel relativ zur optischen Achse, unter dem das für die evaneszente Probenbeleuchtung vorgesehene Beleuchtungslichtstrahlenbündel das Objektiv durch die Frontlinse verlässt. Dieser Winkel wiederum hängt davon ab, mit welchem Abstand zur optischen Achse das Beleuchtungslichtstrahlenbündel durch die hintere Brennebene des Objektivs (Pupille) verläuft. Um ein weitgehend paralleles Beleuchtungslichtstrahlenbündel für die evaneszente Probenbeleuchtung zur Verfügung zu haben, muss das Beleuchtungslichtstrahlenbündel in der hinteren Brennebene des Objektivs einen Fokus aufweisen. Letztlich bestimmt der Abstand des Fokus zur optischen Achse des Objektivs die besagten Winkel und damit die Eindringtiefe des evaneszenten Feldes in die zu untersuchende Probe.

In einer bevorzugten Variante ist im Strahlengang des Beleuchtungslichtstrahlenbündels eine einstellbare Strahlablenkeinrichtung vorgesehen, mit der die Lage des Fokus innerhalb der Objektivpupille verschiebbar ist. Hierdurch wird eine zusätzliche Möglichkeit zur Veränderung der Eindringtiefe geschaffen. Vorzugsweise beinhaltet die Strahlablenkeinrichtung zumindest einen Galvanometerspiegel. Um den Fokus an jede beliebige Stelle innerhalb der Objektivpupille positionieren zu können, beinhaltet die Strahlablenkeinrichtung vorzugsweise zwei Galvanometerspiegel, die Ablenkungen des Beleuchtungslichtstrahlenbündels in unterschiedliche laterale Richtungen (z.B. x- und y-Richtung) bewirken. Die Strahlablenkeinrichtung kann auch dreh- oder kippbare Prismen und/oder dreh- oder kippbare Spiegel beinhalten. Es ist auch denkbar, akusto- oder elektrooptisch wirkende Ablenkelemente zu verwenden.

Das Einstellmittel, mit dem die Polarisation des Beleuchtungslichtstrahlenbündels veränderbar ist, beinhaltet vorzugsweise eine Phasenplatte, vorzugsweise eine - vorzugsweise motorisch - drehbar gelagerte λ/2-Platte. Das Einstellmittel kann auch das Einstellmittel einen Faradayrotator und/oder eine Pockelszelle und/oder doppelbrechendes Material und/oder eine Flüssigkristallzelle beinhalten.

In einer ganz besonders bevorzugten Variante ist ein Speicher vorgesehen, in dem - vorzugsweise probenspezifisch - die zur Erzielung verschiedener Einstelltiefen einzustellenden Polarisationseinstellungen abgelegt sind. Auf diese Weise wird die Einstellung erfingdungsgemäß quantifizierbar und reproduzierbar.

Besonders bevorzugt ist eine Variante, bei der der Polarisationsanalysator im Strahlengang des Messlichtes vor zumindest einem Detektor angeordnet ist, der die Lichtleistung zumindest eines Teils des Messlichts detektiert. Bei dem Polarisationsanalysator kann es sich beispielsweise um eine Polarisationsfolie, ein doppelbrechendes Prisma (z.B. Glan-Thomson-Prisma) oder einen Polarisationsstrahlteiler, der z.B. als Würfel ausgebildet sein kann, handeln.

In einer besonderen Ausführung des Mikroskops bzw. des Beleuchtungsmoduls spaltet der Polarisationsstrahlteiler das Messlicht in einen s-polarisierten Messstrahl und einen p-polarisierten Messstrahl auf. Vorzugsweise sind zwei Detektoren vorgesehen, von denen je ein Detektor den s-polarisierten Messstrahl und den p-polarisieren Messstrahl empfängt. Auf diese Weise kann aus den mit den beiden Detektoren gemessenen Lichtleistungen sehr genau auf die Polarisation des Beleuchtungslichtstrahlenbündels geschlossen werden. Vorzugsweise ist ein Verarbeitungsmodul vorgesehen, das die Messdaten verarbeitet. Das Verarbeitungsmodul kann ebenfalls Bestandteil der Regelschaltung sein.

Vorzugsweise sind zumindest die Lichtquelle und das Einstellmittel zu einem Beleuchtungsmodul, das an ein Mikroskopstativ oder ein bereits bestehendes Mikroskop lösbar ankoppelbar ist, zusammengefasst. Vorzugsweise ist eine Bajonettankopplung vorgesehen.

Das Mikroskop umfasst vorzugsweise zur Bildaufnahme eine Kamera und/oder ein CCD-Element und/oder ein EMCCD-Element.

in einer bevorzugten Variante ist ein Leistungseinstellmittel zur Veränderung der Lichtleistung des Beleuchtungslichtstrahlenbündels vorgesehen. Hierbei kann es sich beispielsweise um einen mechanischen Strahlabschwächer, ein LCD-Modul oder ein elektrooptisches oder akustooptisches Bauteil (z.B. AOTF) handeln.

Vorzugsweise umfasst das Mikroskop ein Rastermikroskop, insbesondere ein konfokales Rastermikroskop.

In einer besonderen Variante sind zumindest die Lichtquelle und das Einstellmittel zu einem Beleuchtungsmodul zusammengefasst, das vorzugsweise an ein Mikroskop und/oder an ein Mikroskopstativ ankoppelbar ist.

Das erfindungsgemäße Beleuchtungsmodul bietet den Vorteil, dass es auch zur Nachrüstung an ein bereits bestehendes Mikroskop oder Mikroskopstativ ankoppelbar ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein erfindungsgemäßes Mikroskop,
- Fig. 2: ein weiteres erfindungsgemäßes Mikroskop und
- Fig. 3: ein weiteres erfindungsgemäßes Mikroskop mit einem Beleuchtungsmodul.

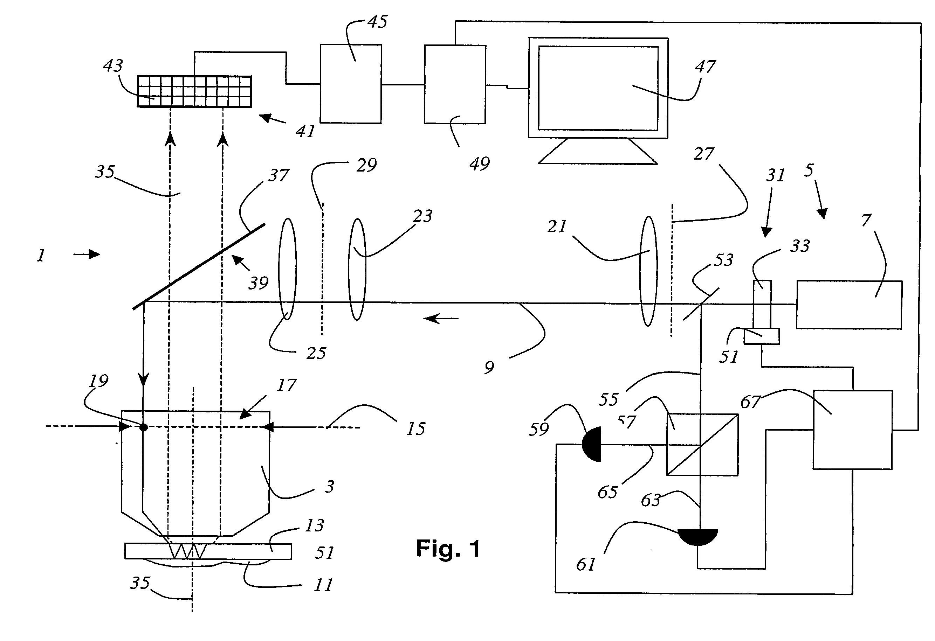

Fig. 1 zeigt ein erfindungsgemäßes Mikroskop 1 mit einem Objektiv 3 und einer Lichtquelle 5, die als Laser 7 ausgebildet ist und die ein Beleuchtungslichtstrahlenbündel 9 erzeugt. Das von der Lichtquelle 5 ausgehende Beleuchtungslichtstrahlenbündel 9 dient zur evaneszenten Beleuchtung einer Probe 11, die an einem Objektträger 13 angelagert ist. Das Beleuchtungslichtstrahlenbündel 9 weist in der Ebene 15 der Objektivpupille 17 einen durch einen Punkt dargestellten Fokus 19 auf. Im Strahlengang des Mikroskops 1 sind mehrere optische Elemente zur Strahlführung und Strahlformung angeordnet. So gibt es beispielsweise eine erste Optik 21, eine zweite Optik 23 und eine Optik 25, die eine erste Zwischenbildebene 27 und eine zweiten Zwischenbildebene 29 erzeugen. Es ist ein Einstellmittel 31 vorgesehen, mit dem die Polarisation des Beleuchtungslichtstrahlenbündels 9 veränderbar ist. Das Einstellmittel 31 ist als um die optische Achse drehbar gelagerte λ/2-Platte 33 ausgebildet. Zu jeder Drehstellung der λ/2-Platte 33 gehört eine resultierende Polarisationseinstellung des Beleuchtungslichtstrahlenbündels 9. Mit Hilfe des Einstellmittels 31 kann die Eindringtiefe des in die Probe 11 und die Lichtleistung des evaneszenten Feldes variiert werden. Die λ/2-Platte 33 wird von einem Stellmotor 51 gedreht.

Das von der Probe 11 ausgehende Detektionslicht 35 gelangt durch das Objektiv 3 sowie durch den Strahlteiler 39, der das Beleuchtungslichtstrahlenbündel 9 zum Objektiv 3 lenkt, hindurch zu einem Detektor 41, der eine CCD-Kamera 43 umfasst und der Detektionslichtdaten erzeugt. Der Strahlteiler 39 ist als dichroitischer Strahlteiler 37 ausgebindet und so ausgelegt, dass Licht der Wellenlänge des Beleuchtungslichtstrahlenbündels 9 reflektiert wird, während Licht der Wellenlänge des Detektionslichts 35 passieren kann.

Die Detektionslichtdaten werden an ein Datenverarbeitungsmodul 45 weiter geleitet. Im Datenverarbeitungsmodul 45 erfolgt u.a. ein Zuordnen der erfassten Bildobjekte und/oder Bildpunke zu verschiedenen Schichttiefen der Probe und die Erzeugung eines 3-D-Datenstapels, der als dreidimensionales Abbild der Probe 11 bzw. des beleuchteten Probenbereichs auf dem Display 47 eines PC 49 dargestellt wird.

Zur Messung und Überwachung der eingestellten Polarisation des Beleuchtungslichtstrahlenbündels 9 ist im weiteren Strahlengang des Beleuchtungslichtstrahlenbündels 9 ein Strahlteiler 53 angeordnet, der einen kleinen Teil des Beleuchtungslichtstrahlenbündels 9 zur Polarisationskontrolle als Messstrahl 55 abspaltet. Der Messstrahl 55 wird von einem Polarisationsstrahlteiler 57 in einen s-polarisierten Teilstrahl 63, der von einem ersten Detektor 59 detektiert wird, und in einen p-polarisierten Teilstrahl 65, der von einem zweiten Detektor 61 detektiert wird, aufgespalten. Aus dem Verhältnis der mit dem ersten Detektor 59 und mit dem zweiten Detektor 61 gemessenen Lichtleistungen kann auf die Polarisation des Beleuchtungslichstrahlenbündels 9 geschlossen werden. Über einen nicht dargestellten Regelkreis wird die Drehstellung der λ/2-Platte 33 entsprechend den Benutzervorgaben eingestellt. Ein Verarbeitungsmodul 67 empfängt die Messsignale des ersten Detektors 59 und des zweiten Detektors 61 sowie die über einen PC eingegebenen Benutzervorgaben und stellt die Drehstellung der λ/2-Platte 33 mit Hilfe des Stellmotors 51 ein. Im PC 49 ist ein Speicher vorgesehen, in dem probenspezifisch die zur Erzielung verschiedener Einstelltiefen einzustellenden Polarisationseinstellungen abgelegt sind, so dass der Benutzer direkt Eindringtiefen vorgeben kann, ohne selbst die dazugehörige Polarisationseinstellung ermitteln zu müssen.

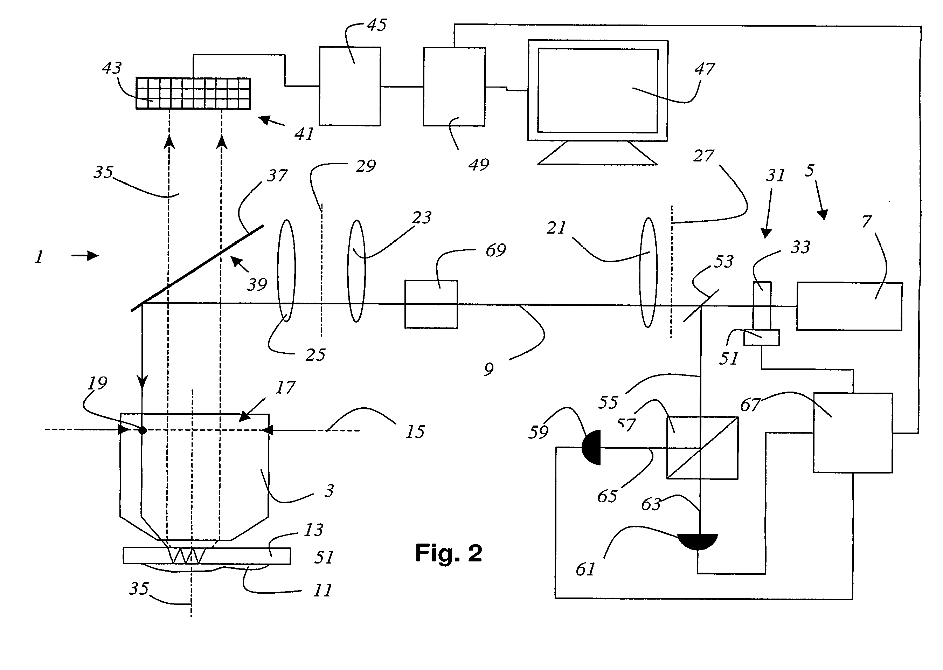

Fig. 2 zeigt ein weiteres erfindungsgemäßes Mikroskop, bei dem zur Einstellung der Eindringtiefe des evaneszenten Feldes neben dem Einstellmittel 31 zur Einstellung der Polarisation des Beleuchtungslichtstrahlenbündels 9 zusätzlich die räumliche Position des Fokus 19 innerhalb der Ebene 15 der Objektivpupille 17 ist mit Hilfe einer einstellbaren Strahlablenkeinrichtung 69 möglich ist. Die einstellbare Strahlablenkeinrichtung 69 beinhaltet einen nicht dargestellten kardanisch aufgehängten Drehspiegel. Mit Hilfe der Strahlablenkeinrichtung 69 kann der Abstand des Fokus 19 zur optischen Achse 71 des Objektivs 3 eingestellt werden und damit die Eindringtiefe des Beleuchtungslichtstrahlenbündels in die Probe 11 variiert werden.

Fig. 3 zeigt ein weiteres erfindungsgemäßes Mikroskop mit einem Beleuchtungsmodul 73, das an ein bereits bestehendes Mikroskop 75 zur Erzielung einer bezüglich der Eindringtiefe und bezüglich der Beleuchtungslichtleistung einstellbaren evaneszenten Beleuchtung angekoppelt ist. Das Beleuchtungsmodul 73 weist einen nicht gezeigten Bajonettanschluss zur optischen Ankopplung an das Mikroskop 75 auf. Ferner weist Beleuchtungsmodul 73 ebenfalls nicht gezeigte Steckanschlüsse für die elektrischen und elektronischen Verbindungen auf.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 1: Mikroskop
- 3: Objektiv
- 5: Lichtquelle
- 7: Laser
- 9: Beleuchtungslichtstrahlenbündel
- 11: Probe
- 13: Objektträger
- 15: Ebene der Objektivpupille 17
- 17: Objektivpupille
- 19: Fokus
- 21: erste Optik
- 23: zweite Optik
- 25: Optik
- 27: erste Zwischenbildebene
- 29: zweite Zwischenbildebene
- 31: Einstellmittel
- 33: λ/2-Platte
- 35: Detektionslicht
- 37: dichroitischer Strahlteiler
- 39: Strahlteiler
- 41: Detektor
- 43: CCD-Kamera
- 45: Datenverarbeitungsmodul
- 47: Display
- 49: PC
- 51: Stellmotor
- 53: Strahlteiler
- 55: Messstrahl
- 57: Polarisationsstrahlteiler
- 59: erster Detektor
- 61: zweiter Detektor
- 63: s-polarisierter Teilstrahl
- 65: p-polarisierter Teilstrahl
- 67: Verarbeitungsmodul
- 69: einstellbare Strahlablenkeinrichtung
- 71: optische Achse
- 73: Beleuchtungsmodul
- 75: Mikroskop

## Patentansprüche

1. Mikroskop mit einer Lichtquelle (5) zur Erzeugung eines Beleuchtungslichtstrahlenbündels (9), mit einem Objektiv (3), in welches das Beleuchtungslichtstrahlenbündel (9) derart eingekoppelt wird, dass eine evaneszente Beleuchtung einer Probe (11) realisiert ist, wobei das Objektiv (3) eine Objektivpupille (17) aufweist und das Beleuchtungslichtstrahlenbündel (9) zur evaneszenten Beleuchtung der Probe (11) im Bereich der Objektivpupille (17) einen Fokus (19) aufweist, sowie mit einem Einstellmittel (31), mit dem die Polarisation des Beleuchtungslichtstrahlenbündels (9) veränderbar ist,
**dadurch gekennzeichnet, dass** im Strahlengang des Beleuchtungslichtstrahlenbündels (9) ein Strahlteiler (53) zur Auskopplung eines Messstrahls (55) aus dem Beleuchtungslichtstrahlenbündels (9) angeordnet ist und dass ein Regelkreis zur Regelung der Eindringtiefe der evaneszenten Beleuchtung in die Probe (11) realisiert ist, wobei als Messglied des Regelkreises ein im Strahlengang des Messstrahls (55) angeordneter Polarisationsanalysator zur Bestimmung der Polarisation des Messstrahls (55) und als Stellglied des Regelkreises das Einstellmittel (31) vorgesehen sind.

2. Mikroskop nach Anspruch 1, **dadurch gekennzeichnet, dass** eine einstellbare Strahlablenkeinrichtung (69) vorgesehen ist, mit der die Lage des Fokus (19) innerhalb der Objektivpupille (17) verschiebbar ist.

3. Mikroskop nach Anspruch 1 oder 2, **dadurch gekennzeichnet, dass** das Einstellmittel (31) eine Phasenplatte, vorzugsweise eine λ/12-Platte (33), beinhaltet.

4. Mikroskop nach einem der Ansprüche 1 bis 3, **dadurch gekennzeichnet, dass** das Einstellmittel (31) einen Faradayrotator und/oder eine Pockelszelle und/oder doppelbrechendes Material und/oder eine Flüssigkristallzelle beinhaltet.

5. Mikroskop nach einem der Ansprüche 1 bis 4, **dadurch gekennzeichnet, dass** der Polarisationsanalysator einen Polarisationsstrahlteiler (57) umfasst.

6. Mikroskop nach Anspruch 5, **dadurch gekennzeichnet, dass** der Polarisationsstrahlteiler (57) das Messlicht in einen s-polarisierten Messstrahl (63) und einen p-polarisierten Messstrahl (65) aufspaltet.

7. Mikroskop nach Anspruch 6, **dadurch gekennzeichnet, dass** je ein Detektor (59, 61) den s-polarisierten Messstrahl (63) und den p-polarisierten Messstrahl (65) empfängt.

8. Mikroskop nach einem der Ansprüche 1 bis 7, **dadurch gekennzeichnet, dass** zumindest die Lichtquelle (5) und das Einstellmittel (31) zu einem Beleuchtungsmodul (73) zusammengefasst sind.

9. Mikroskop nach Anspruch 8, **dadurch gekennzeichnet, dass** das Mikroskop ein Mikroskopstativ aufweist und dass das Beleuchtungsmodul (73) lösbar an das Mikroskopstativ ankoppelbar ist.

10. Mikroskop nach einem der Ansprüche 1 bis 9, **dadurch gekennzeichnet, dass** zur Bildaufnahme eine Kamera (43) und/oder ein CCD-Element und/oder ein EMCCD-Element vorgesehen ist.

11. Mikroskop nach einem der Ansprüche 1 bis 10, **dadurch gekennzeichnet, dass** ein Leistungseinstellmittel zur Veränderung der Lichtleistung des Beleuchtungslichtstrahlenbündels (9) vorsehen ist.

12. Mikroskop nach einem der Ansprüche 1 bis 11, **dadurch gekennzeichnet, dass** das Mikroskop ein Rastermikroskop, insbesondere ein konfokales Rastermikroskop, umfasst.

13. Beleuchtungsmodul mit einer Lichtquelle (5) zur Erzeugung eines Beleuchtungslichtstrahlenbündels (9), wobei das Beleuchtungsmodul derart an ein Mikroskop (1) ankoppelbar ist, dass das Beleuchtungslichtstrahlenbündel (9) in der Ebene der Objektivpupille (17) des Mikroskops (1) einen Fokus (19) aufweist und eine evaneszente Beleuchtung einer Probe (11) realisiert ist, sowie mit einem Einstellmittel (31), mit dem die Polarisation des Beleuchtungslichtstrahlenbündels (9) veränderbar ist,
**dadurch gekennzeichnet, dass** im Strahlengang des Beleuchtungslichtstrahlenbündels (9) ein Strahlteiler (53) zur Auskopplung eines Messstrahls (55) aus dem Beleuchtungslichtstrahlenbündels (9) angeordnet ist und dass ein Regelkreis zur Regelung der Eindringtiefe der evaneszenten Beleuchtung in die Probe (11) realisiert ist, wobei als Messglied des Regelkreises ein im Strahlengang des Messstrahls (55) angeordneter Polarisationsanalysator zur Bestimmung der Polarisation des Messstrahls (55) und als Stellglied des Regelkreises das Einstellmittel (31) vorgesehen sind.

14. Beleuchtungsmodul nach Anspruch 13, **dadurch gekennzeichnet, dass** eine einstellbare Strahlablenkeinrichtung (69) vorgesehen ist, mit der die Lage des Fokus (19) innerhalb der Objektivpupille (17) verschiebbar ist.

15. Beleuchtungsmodul nach Anspruch 13 oder 14, **dadurch gekennzeichnet, dass** das Einstellmittel (31) eine Phasenplatte, vorzugsweise eine λ/2-Platte (33), beinhaltet.

16. Beleuchtungsmodul nach einem der Ansprüche 13 bis 15, **dadurch gekennzeichnet, dass** das Einstellmittel (31) einen Faradayrotator und/oder eine Pockelzelle und/oder doppelbrechendes Material und/oder eine Flüssigkristallzelle beinhaltet.

17. Beleuchtungsmodul nach einem der Ansprüche 13 bis 16, **dadurch gekennzeichnet, dass** der Polarisationsanalysator einen Polarisationsstrahlteiler (57) umfasst.

18. Beleuchtungsmodul nach Anspruch 17, **dadurch gekennzeichnet, dass** der Polarisationsstrahlteiler (57) das Messlicht in einen s-polarisierten Messstrahl (63) und einen p-polarisierten Messstrahl (65) aufspaltet.

19. Beleuchtungsmodul nach Anspruch 18, **dadurch gekennzeichnet, dass** je ein Detektor (59, 61) den s-polarisierten Messstrahl (63) und den p-polarisierten Messstrahl (65) empfängt.

20. Beleuchtungsmodul nach einem der Ansprüche 13 bis 19, **dadurch gekennzeichnet, dass** das Mikroskop (1) ein Mikroskopstativ aufweist und dass das Beleuchtungsmodul lösbar an das Mikroskopstativ ankoppelbar ist.

21. Beleuchtungsmodul nach einem der Ansprüche 13 bis 20, **dadurch gekennzeichnet, dass** zur Bildaufnahme eine Kamera (43) und/oder ein CCD-Element und/oder ein EMCCD-Element vorgesehen ist.

22. Beleuchtungsmodul nach einem der Ansprüche 13 bis 21, **dadurch gekennzeichnet, dass** ein Leistungseinstellmittel zur Veränderung der Lichtleistung des Beleuchtungslichtstrahlenbündels (9)vorsehen ist.

23. Beleuchtungsmodul nach einem der Ansprüche 13 bis 22, **dadurch gekennzeichnet, dass** das Mikroskop (1) ein Rastermikroskop, insbesondere ein konfokales Rastermikroskop, umfasst.

## Claims

1. Microscope having a light source (5) for generating an illuminating light beam (9), having an objective (3) into which the illuminating light beam (9) is directed in such a manner that an evanescent illumination of a specimen (11) is produced, the objective (3) having an objective aperture diaphragm (17) and the illuminating light beam (9) for the evanescent illumination of the specimen (11) having a focal point (19) in the region of the objective aperture diaphragm (17), and the microscope also having an adjusting means (31) with which the polarisation of the illuminating light beam (9) can be altered,
**characterised in that** a beam splitter (53) for splitting off a measuring beam (55) from the illuminating light beam (9) is arranged in the beam path of the illuminating light beam (9) and **in that** a control circuit for controlling the depth of penetration of the evanescent illumination into the specimen (11) is produced, a polarisation analyser for determining the polarisation of the measuring beam (55) and arranged in the beam path of the measuring beam (55) being provided as the measuring member of the control circuit, and the adjusting means (31) being provided as the actuator of the control circuit.

2. Microscope according to claim 1, **characterised in that** an adjustable beam deflecting device (69) is provided by means of which the position of the focal point (19) inside the objective aperture diaphragm (17) can be displaced.

3. Microscope according to claim 1 or 2, **characterised in that** the adjusting means (31) contains a phase plate, preferably a 1/2-wave plate (33).

4. Microscope according to any one of claims 1 to 3,
**characterised in that** the adjusting means (31) contains a Faraday rotator and/or a Pockels cell and/or birefringent material and/or a liquid crystal cell.

5. Microscope according to any one of claims 1 to 4,
**characterised in that** the polarisation analyser comprises a polarisation beam splitter (57).

6. Microscope according to claim 5, **characterised in that** the polarisation beam splitter (57) splits the measuring light into an s-polarised measuring beam (63) and a p-polarised measuring beam (65).

7. Microscope according to claim 6, **characterised in that** a respective detector (59, 61) receives the s-polarised measuring beam (63) and the p-polarised measuring beam (65).

8. Microscope according to any one of claims 1 to 7,
**characterised in that** at least the light source (5) and the adjusting means (31) are combined to form an illumination module (73).

9. Microscope according to claim 8, **characterised in that** the microscope has a microscope stand and **in that** the illumination module (73) can be releasably coupled to the microscope stand.

10. Microscope according to any one of claims 1 to 9,
**characterised in that** a camera (43) and/or a CCD element and/or an EMCCD element is provided for recording images.

11. Microscope according to any one of claims 1 to 10,
**characterised in that** a power-adjusting means is provided to alter the light power of the illuminating light beam (9).

12. Microscope according to any one of claims 1 to 11,
**characterised in that** the microscope comprises a scanning microscope, especially a confocal scanning microscope.

13. Illumination module having a light source (5) for generating an illuminating light beam (9), the illumination module being couplable to a microscope (1) in such a manner that the illuminating light beam (9) has a focal point (19) in the plane of the objective aperture diaphragm (17) of the microscope (1) and an evanescent illumination of a specimen (11) is produced, and having an adjusting means (31) by means of which the polarisation of the illuminating light beam (9) can be altered,
**characterised in that** a beam splitter (53) for splitting off a measuring beam (55) from the illuminating light beam (9) is arranged in the beam path of the illuminating light beam (9) and **in that** a control circuit for controlling the depth of penetration of the evanescent illumination into the specimen (11) is produced, a polarisation analyser for determining the polarisation of the measuring beam (55) and arranged in the beam path of the measuring beam (55) being provided as the measuring member of the control circuit, and the adjusting means (31) being provided as the actuator of the control circuit.

14. Illumination module according to claim 13,
**characterised in that** an adjustable beam-deflecting device (69) is provided by means of which the position of the focal point (19) inside the objective aperture diaphragm (17) can be displaced.

15. Illumination module according to claim 13 or 14,
**characterised in that** the adjusting means (31) contains a phase plate, preferably a 1/2-wave plate (33).

16. Illumination module according to any one of claims 13 to 15, **characterised in that** the adjusting means (31) contains a Faraday rotator and/or a Pockels cell and/or birefringent material and/or a liquid crystal cell.

17. Illumination module according to any one of claims 13 to 16, **characterised in that** the polarisation analyser comprises a polarisation beam splitter (57).

18. Illumination module according to claim 17,
**characterised in that** the polarisation beam splitter (57) splits the measuring light into an s-polarised measuring beam (63) and a p-polarised measuring beam (65).

19. Illumination module according to claim 18,
**characterised in that** a respective detector (59, 61) receives the s-polarised measuring beam (63) and the p-polarised measuring beam (65).

20. Illumination module according to any one of claims 13 to 19, **characterised in that** the microscope (1) has a microscope stand and **in that** the illumination module can be releasably coupled to the microscope stand.

21. Illumination module according to any one of claims 13 to 20, **characterised in that** a camera (43) and/or a CCD element and/or an EMCCD element is provided for recording images.

22. Illumination module according to any one of claims 13 to 21, **characterised in that** a power-adjusting means is provided for altering the light power of the illuminating light beam (9).

23. Illumination module according to any one of claims 13 to 22, **characterised in that** the microscope (1) comprises a scanning microscope, especially a confocal scanning microscope.

## Revendications

1. Microscope, avec une source de lumière (5) pour générer un faisceau de rayons de lumière d'éclairage (9), avec un objectif (3), dans lequel le faisceau de rayons de lumière d'éclairage (9) est injecté de telle sorte qu'un éclairage évanescent d'un échantillon (11) soit réalisé, dans lequel l'objectif (3) présente une pupille d'objectif (17) et le faisceau de rayons de lumière d'éclairage (9) présente pour l'éclairage évanescent de l'échantillon (11) au niveau de la pupille d'objectif (17) un foyer (19), ainsi qu'avec des moyens de réglage (31) qui permettent de modifier la polarisation du faisceau de rayons de lumière d'éclairage (9),
**caractérisé en ce que** sur la trajectoire du faisceau de rayons de lumière d'éclairage (9) est disposé un séparateur de faisceaux (53) pour le déclenchement d'un rayon de mesure (55) à partir du faisceau de rayons de lumière d'éclairage (9) et **en ce qu'**une boucle d'asservissement pour réguler la profondeur de pénétration de l'éclairage évanescent dans l'échantillon est réalisée, dans lequel en tant qu'élément de mesure de la boucle d'asservissement, un analyseur de polarisation disposé sur la trajectoire du rayon de mesure (55) est prévu pour déterminer la polarisation du rayon de mesure (55) et les moyens de réglage (31) sont prévus comme actionneur de la boucle d'asservissement.

2. Microscope selon la revendication 1, **caractérisé en ce qu'**un dispositif déflecteur de rayon réglable (69) est prévu par lequel la position du foyer (19) peut être déplacée à l'intérieur de la pupille d'objectif (17).

3. Microscope selon la revendication 1 ou 2, **caractérisé en ce que** les moyens de réglage (31) comprennent une lame de phase, de préférence une lame λ/2 (33).

4. Microscope selon l'une quelconque des revendications 1 à 3,
**caractérisé en ce que** les moyens de réglage (31) comprennent un rotateur de Faraday et/ou une cellule de Pockels et/ou un matériau biréfringent et/ou une cellule à cristaux liquides.

5. Microscope selon l'une quelconque des revendications 1 à 4,
**caractérisé en ce que** l'analyseur de polarisation comprend un séparateur de faisceaux de polarisation (57).

6. Microscope selon la revendication 5, **caractérisé en ce que** le séparateur de faisceaux de polarisation (57) sépare la lumière de mesure en un rayon de mesure polarisé s (63) et un rayon de mesure polarisé p (65).

7. Microscope selon la revendication 6, **caractérisé en ce que** chaque fois un détecteur (59, 61) reçoit le rayon de mesure polarisé s (63) et le rayon de mesure polarisé p (65).

8. Microscope selon l'une quelconque des revendications 1 à 7,
**caractérisé en ce qu'**au moins la source de lumière (5) et les moyens de réglage (31) sont regroupés en un module d'éclairage (73).

9. Microscope selon la revendication 8, **caractérisé en ce que** le microscope présente un statif de microscope et **en ce que** le module d'éclairage (73) peut être couplé de façon amovible avec le statif de microscope.

10. Microscope selon l'une quelconque des revendications 1 à 9,
**caractérisé en ce que** pour la prise de vue, une caméra (43) et/ou un élément CCD et/ou un élément EMCCD sont prévus.

11. Microscope selon l'une quelconque des revendications 1 à 10,
**caractérisé en ce que** des moyens de réglage de puissance sont prévus pour modifier le rendement lumineux du faisceau de rayons de lumière d'éclairage (9).

12. Microscope selon l'une quelconque des revendications 1 à 11,
**caractérisé en ce que** le microscope comprend un microscope à balayage, en particulier un microscope à balayage confocal.

13. Module d'éclairage avec une source de lumière (5) pour générer un faisceau de rayons de lumière d'éclairage (9), dans lequel le module d'éclairage peut être couplé à un microscope (1) de telle sorte que le faisceau de rayons de lumière d'éclairage (9) présente dans le plan de la pupille d'objectif (17) du microscope (1) un foyer (19) et qu'un éclairage évanescent d'un échantillon (11) est réalisé, ainsi qu'avec des moyens de réglage (31) qui permettent de modifier la polarisation du faisceau de rayons de lumière d'éclairage (9),
**caractérisé en ce que** sur la trajectoire des rayons du faisceau de rayons de lumière d'éclairage (9), un séparateur de faisceaux (53) est disposé pour le déclenchement d'un rayon de mesure (55) à partir du faisceau de rayons de lumière d'éclairage (9), et **en ce qu'**une boucle d'asservissement est réalisée pour réguler la profondeur de pénétration de l'éclairage évanescent dans l'échantillon (11), dans lequel un analyseur de polarisation disposé sur la trajectoire des rayons du rayon de mesure (55) est prévu comme élément de mesure de la boucle d'asservissement pour déterminer la polarisation du rayon de mesure (55) et les moyens de réglage (31) sont prévus comme actionneur de la boucle d'asservissement.

14. Module d'éclairage selon la revendication 13, **caractérisé en ce qu'**un dispositif déflecteur de rayon réglable (69) est prévu par lequel la position du foyer (19) peut être déplacée à l'intérieur de la pupille d'objectif (17).

15. Module d'éclairage selon la revendication 13 ou 14, **caractérisé en ce que** les moyens de réglage (31) comprennent une lame de phase, de préférence une lame λ/2 (33).

16. Module d'éclairage selon l'une quelconque des revendications 13 à 15, **caractérisé en ce que** les moyens de réglage (31) comprennent un rotateur de Faraday et/ou une cellule de Pockels et/ou un matériau biréfringent et/ou une cellule à cristaux liquides.

17. Module d'éclairage selon l'une quelconque des revendications 13 à 16, **caractérisé en ce que** l'analyseur de polarisation comprend un séparateur de faisceaux de polarisation (57).

18. Module d'éclairage selon la revendication 17, **caractérisé en ce que** le séparateur de faisceaux de polarisation (57) sépare la lumière de mesure en un rayon de mesure polarisé s (63) et un rayon de mesure polarisé p (65).

19. Module d'éclairage selon la revendication 18, **caractérisé en ce que** respectivement un détecteur (59, 61) reçoit le rayon de mesure polarisé s (63) et le rayon de mesure polarisé p (65).

20. Module d'éclairage selon l'une quelconque des revendications 13 à 19, **caractérisé en ce que** le microscope (1) présente un statif de microscope et **en ce que** le module d'éclairage peut être couplé de façon amovible avec le statif de microscope.

21. Module d'éclairage selon l'une quelconque des revendications 13 à 20, **caractérisé en ce que** pour la prise de vue, une caméra (43) et/ou un élément CCD et/ou un élément EMCCD sont prévus.

22. Module d'éclairage selon l'une quelconque des revendications 13 à 21, **caractérisé en ce que** des moyens de réglage de puissance sont prévus pour modifier le rendement lumineux du faisceau de rayons de lumière d'éclairage (9).

23. Module d'éclairage selon l'une quelconque des revendications 13 à 22, **caractérisé en ce que** le microscope (1) comprend un microscope à balayage, en particulier un microscope à balayage confocal.
